# EUROPÄISCHE PATENTSCHRIFT

(11) **EP 3 630 532 B1**
(45) Veröffentlichungstag und Bekanntmachung des Hinweises auf die Patenterteilung: **06.07.2022**
(21) Anmeldenummer: 18725195.4
(22) Anmeldetag: 16.05.2018
(51) Int. Cl.: B60L 53/22, B60L 53/18, H02J 7/34

(54) **ENLADESCHALTUNG UND VERFAHREN ZUR ENTLADUNG EINES HOCHVOLT-ZWISCHENKREISES EINES FAHRZEUGS**
DISCHARGE CIRCUIT AND METHOD FOR DISCHARGING A HIGH-VOLTAGE DC LINK OF A VEHICLE
CIRCUIT DE DÉCHARGE ET PROCÉDÉ DE DÉCHARGE D'UN CIRCUIT INTERMÉDIAIRE HAUTE TENSION D'UN VÉHICULE

(30) Priorität: 31.05.2017 DE 102017209100
(43) Veröffentlichungstag der Anmeldung: 08.04.2020
(73) Patentinhaber: Robert Bosch GmbH, 70442 Stuttgart (DE)
(72) Erfinder: EBERLEIN, Edwin, 70197 Stuttgart (DE)
(86) Internationale Anmeldenummer: PCT/EP2018/062689
(87) Internationale Veröffentlichungsnummer: WO 2018/219643

(56) Entgegenhaltungen:
- EP-A1- 2 284 982
- WO-A2-2015/082193
- DE-A1-102009 055 053
- DE-A1-102015 217 533
- DE-A1-102016 222 632
- US-A1- 2012 268 079
- US-A1- 2016 233 688

## Beschreibung

Die Erfindung betrifft eine Entladeschaltung und ein Verfahren zur Entladung eines Hochvolt-Zwischenkreises eines Fahrzeugs. Ferner betrifft die Erfindung einen Antriebsstrang mit einer Entladeschaltung sowie ein Fahrzeug mit einem Antriebsstrang. Ferner betrifft die Erfindung ein Computerprogramm und ein maschinenlesbares Speichermedium.

### Stand der Technik

Aus der WO 2009/106187 A1, der DE 10 2009 055053 A1 und der EP 2 284 982 A1 ist jeweils ein Verfahren und eine Vorrichtung zum Entladen eines Hochspannungsnetzes bekannt. Bei herkömmlichen Fahrzeugen beträgt die Spannung im Bordnetz ungefähr 14 Volt. Bei Hybridfahrzeugen oder Fahrzeugen mit Elektroantrieb kommen Spannungen im Traktionsnetz zum Einsatz, die mehrere 100 Volt betragen können. Elektrische Spannungen, die größer als 60 Volt sind, werden als Hochspannung bezeichnet. Aus Gründen der Sicherheit müssen Hochspannungsnetze, insbesondere Bordnetze oder Traktionsnetze, abschaltbar sein und entladen werden können. Bekannte Hochspannungsnetze umfassen zu diesem Zweck eine aktive und/ oder eine passive Entladevorrichtung. Diese Vorrichtung besteht in der Regel aus einem zweipoligen Hauptschalter zum Abtrennen der Batterie vom übrigen Netz sowie geeignete Schaltungen, beispielsweise einen schaltbaren Widerstand, über die die Ladung bei Bedarf abgebaut wird. Eine passive Entladung besteht in der Regel aus mindestens einem Widerstand, der parallel zum Energiespeicher und zum Hochspannungsnetz geschaltet ist. Derartige passive Entladeschaltungen sind dazu eingerichtet eine im Hochspannungsnetz befindliche Zwischenkreiskapazität, insbesondere einen sogenannten Zwischenkreiskondensator, innerhalb einer vorgegebenen Zeit, meist 120 Sekunden, unabhängig von einer anfänglich auftretenden Spannung auf eine Spannung kleiner als 60 Volt (Berührsicherheit) zu entladen. Es besteht das Bedürfnis alternative Entladeverfahren und Vorrichtungen für Hochspannungsnetze von Fahrzeugen bereitzustellen.

### Offenbarung der Erfindung

Es wird eine Entladeschaltung zur Entladung eines Hochvolt-Zwischenkreises eines Fahrzeugs bereitgestellt. Der Hochvolt-Zwischenkreis umfasst einen Zwischenkreiskondensator. An dem Zwischenkreiskondensator liegt eine Hochvoltspannung an. Die Entladeschaltung ist dazu eingerichtet, in Abhängigkeit der Hochvoltspannung die Höhe eines Entladestroms durch die Entladeschaltung einzustellen, insbesondere variabel einzustellen.

Es wird eine Entladeschaltung zur Entladung eines Hochvolt-Zwischenkreises bereitgestellt. Der Hochvolt-Zwischenkreis umfasst einen Zwischenkreiskondensator, welcher beispielweise für den Betrieb eines elektrischen Maschine hochvoltseitig zwischen ein Pulswechselrichter und einer Hochvoltbatterie zur Glättung der beim Betrieb des Pulswechselrichters entstehenden Strom- und Spannungsspitzen geschaltet wird. An dem Zwischenkreiskondensator liegt eine Hochvoltspannung an. Die Entladeschaltung ist dem Zwischenkreiskondensator parallel geschaltet, so dass auch an den Eingangsanschlüssen der Entladeschaltung die Hochvoltspannung anliegt. Die Entladeschaltung ist dazu eingerichtet in Abhängigkeit der Höhe der Hochvoltspannung die Höhe eines Entladestroms durch die Entladeschaltung variabel einzustellen. In Abhängigkeit der Höhe der Hochvoltspannung, stellt die Entladeschaltung stufenlos einen höheren oder niedrigeren Entladestrom durch die Entladeschaltung ein. Die Entladeschaltung kann insbesondere einen DCDC-Wandler, einen Flyback- oder Sperrwandler umfassen. Die Einstellung des Entladestroms in Abhängigkeit der Hochvoltspannung kann beispielsweise mittels einer Hardwareschaltung umgesetzt sein oder mittels einer Logikeinheit in Abhängigkeit einer Spannungsmessung per Software gesteuert werden. Eine Hardwareschaltung umfasst beispielsweise einen Spannungs- oder Potentialteiler, mit dem je nach Parametrierung der in Reihe geschalteten Widerstände eine entsprechende Entladung bei einer vorgegebenen Hochvoltspannung erfolgt. Die weitere Regelung des Entladestroms erfolgt beispielsweise mittels eines Differenzverstärkers. Vorteilhaft wird eine Entladeschaltung zur Entladung eines Hochvolt-Zwischenkreises eines Fahrzeugs bereitgestellt.

Bei der Erfindung wird der Entladestrom durch die Entladeschaltung mit sinkender Hochvoltspannung größer, falls die Hochvoltspannung kleiner als ein unterer Betriebsspannungswert ist.

Mittels des Hochvolt-Zwischenkreises wird beispielsweise ein elektrischer Antriebsstrang mit elektrischer Energie versorgt. Für den Betrieb des elektrischen Antriebsstrangs liegt die Hochvoltspannung in einem vorgebbaren Bereich. Wird der elektrische Antriebsstrang nicht benötigt oder eine Integritätsverletzung erkannt ist die Hochvoltspannung innerhalb vorgegebener Zeiten unter die Berührspannung abzusenken um das Gefährdungsrisiko zu senken. Insbesondere falls die Hochvoltspannung zu gering wird, ist ein bestimmungsgemäßer Betrieb des Antriebsstrangs nicht mehr möglich. Um das Gefährdungsrisiko zu senken, wird daher möglichst schnell die Spannung im Hochvolt-Zwischenkreis reduziert, sobald diese auf einen Wert absinkt, der unterhalb des normalen Betriebsbereiches liegt. Daher wird der Entladestrom durch die Entladeschaltung mit Sinken der Hochvoltspannung kontinuierlich größer, falls die Hochvoltspannung kleiner ist als ein, insbesondere vorgebbarer, unterer Betriebsspannungswert ist. Dieser Betriebsspannungswert entspricht beispielsweise der Grenze, bei deren Unterschreitung ein bestimmungsgemäßer Betrieb (beispielsweise Vermeidung einer Schädigung der Hochvoltbatterie; Vermeidung schlechter Wirkungsgrad; Sicherstellung der Bereitstellung spezifizierten Ausgangsleistung) des Antriebsstrangs nicht mehr gewährleistet werden kann. Vorteilhaft wird eine Entladeschaltung bereitgestellt, welche einen sicheren Betrieb des Hochvolt-Zwischenkreises gewährleistet und eine beschleunigte Entladung für den Fall, dass ein sicherer Betrieb nicht mehr gewährleistet werden kann.

In einer anderen Ausgestaltung der Erfindung wird der Entladestrom mittels der Entladeschaltung geregelt.

Die Regelung des Entladestroms durch die Entladeschaltung kann mittels Hardware oder Software erfolgen. Eine Hardware-Schaltung kann so ausgestaltet sein, dass sich in Abhängigkeit der Hochvoltspannung die Höhe des Entladestroms ändert. Die Hardware-Schaltung kann hierzu beispielsweise einen Potentialteiler aus einer Widerstands-Reihenschaltung umfassen, an dessen Mittenabgriff insbesondere das Gate eines Transistors zur Schaltung des Entladestroms, angeschlossen ist. Die Höhe des Entladestroms kann prinzipiell alternativ mittels einer Logikeinheit, beispielsweise ein Microcontroller, in Abhängigkeit einer gemessenen Hochvoltspannung eingestellt werden. Neben der Abhängigkeit von der Hochvoltspannung können auch weitere Parameter beispielsweise die Höhe des Entladestroms selbst als Regelparameter verwendet werden. Beispielsweise kann der Entladestrom auf einen maximalen Entladestrom begrenzt werden. Vorteilhaft wird eine verbesserte Entladeschaltung zur Entladung eines Hochvolt-Zwischenkreises eines Fahrzeugs bereitgestellt.

In einer anderen Ausgestaltung der Erfindung wird der Entladestrom durch die Entladeschaltung minimal, falls die Hochvoltspannung kleiner als Berührspannungswert ist.

Die Entladeschaltung dient der Betriebssicherheit des Hochvolt-Zwischenkreises. Wenn die Hochvoltspannung des Hochvolt-Zwischenkreises unterhalb eines Berührspannungswertes gesunken ist, beispielsweise 60 Volt, geht von der elektrischen Energie in dem Hochvolt-Zwischenkreis keine Gefahr mehr aus. Daher ist ein weiteres Entladen des Hochvolt-Zwischenkreises nicht notwendig. Daher wird der Entladestrom durch die Entladeschaltung minimal, falls die Hochvoltspannung kleiner als der Berührspannungswert ist. Vorteilhaft wird eine verbesserte Entladeschaltung zur Entladung eines Hochvolt-Zwischenkreises eines Fahrzeugs bereitgestellt.

In einer anderen Ausgestaltung der Erfindung umfasst die Entladeschaltung als Verbraucher einen Lastwiderstand.

Für den raschen Verbrauch der elektrischen Energie des Hochvolt-Zwischenkreises umfasst die Entladeschaltung einen elektrischen Verbraucher. Dieser kann beispielsweise ein Lastwiderstand sein und ist insbesondere für eine rasche Entladung ein niederohmiger Lastwiderstand. Vorteilhaft wird eine Möglichkeit für einen Verbraucher einer Entladeschaltung bereitgestellt.

Ferner betrifft die Erfindung einen Antriebsstrang mit einer Entladeschaltung und insbesondere mit einer Leistungselektronik und/oder einer Hochvoltbatterie und/oder einem elektrischen Antrieb.

Ein derartiger Antriebsstrang dient beispielweise dem Antrieb eines elektrischen Fahrzeugs. Mittels des Verfahrens und der Vorrichtung wird ein sicherer Betrieb des Antriebsstrangs ermöglicht, insbesondere eine sichere Entladung des Hochvolt-Zwischenkreises des Antriebsstrangs ermöglicht.

Ferner betrifft die Erfindung ein Fahrzeug, mit einer beschriebenen Vorrichtung. Vorteilhaft wird somit ein Fahrzeug bereitgestellt, welches eine Vorrichtung umfasst, mit der eine effiziente Entladung eines Hochvolt-Zwischenkreises erfolgt.

Ferner umfasst die Erfindung ein Verfahren zur Entladung eines Hochvolt-Zwischenkreises eines Fahrzeugs. Der Hochvolt-Zwischenkreis umfasst einen Zwischenkreiskondensator, an dem eine Hochvoltspannung anliegt. Weiter ist eine Entladeschaltung vorgesehen. Das Verfahren umfasst die Schritte: Ermitteln der Hochvoltspannung; Einstellen eines, insbesondere variablen, Entladestroms durch die Entladeschaltung in Abhängigkeit der ermittelten Hochvoltspannung.

Es wird ein Verfahren zur Entladung eines Hochvolt-Zwischenkreises bereitgestellt. Der Hochvolt-Zwischenkreis umfasst einen Zwischenkreiskondensator, welcher beispielweise für den Betrieb eines elektrischen Maschine hochvoltseitig zwischen ein Pulswechselrichter und einer Hochvoltbatterie zur Glättung der beim Betrieb des Pulswechselrichters entstehenden Strom- und Spannungsspitzen geschaltet wird. An dem Zwischenkreiskondensator liegt eine Hochvoltspannung an. Die Entladeschaltung ist dem Zwischenkreiskondensator parallel geschaltet, so dass auch an den Eingangsanschlüssen der Entladeschaltung die Hochvoltspannung anliegt. Das Verfahren umfasst das Ermitteln der Hochvoltspannung. Dies erfolgt beispielsweise mittels bekannter Messverfahren oder mittels einer Hardwareschaltung. Anschließend wird, insbesondere variabel, ein Entladestrom durch die Entladeschaltung in Abhängigkeit der ermittelten Hochvoltspannung eingestellt. Vorteilhaft wird ein Verfahren zur Entladung eines Hochvolt-Zwischenkreises eines Fahrzeugs bereitgestellt.

Ferner betrifft die Erfindung ein Computerprogramm, das eingerichtet ist, das bisher beschriebene Verfahren auszuführen.

Ferner betrifft die Erfindung ein maschinenlesbares Speichermedium, auf dem das beschriebene Computerprogramm gespeichert ist.

Es versteht sich, dass die Merkmale, Eigenschaften und Vorteile der erfindungsgemäßen Vorrichtung entsprechend auf das Verfahren bzw. den Antriebsstrang und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden, dazu zeigen:
Figur 1
   zeigt eine schematische Darstellung der Entladeschaltung zur Entladung eines Hochvolt-Zwischenkreises eines Fahrzeugs,
Figur 2
   ein schematisch dargestellter Antriebsstrang,
Figur 3
   ein schematisch dargestelltes Fahrzeug mit einem Antriebsstrang,
Figur 4
   ein schematisch dargestelltes Ablaufdiagramm für ein Verfahren zur Entladung eines Hochvolt-Zwischenkreises eines Fahrzeugs.
Figur 5
   ein schematisch dargestelltes Spannungs-, Strom-, Zeitdiagramm,
Figur 6
   eine schematisch dargestellte Schaltungstopologie einer Entladeschaltung zur Entladung eines Hochvolt-Zwischenkreises.

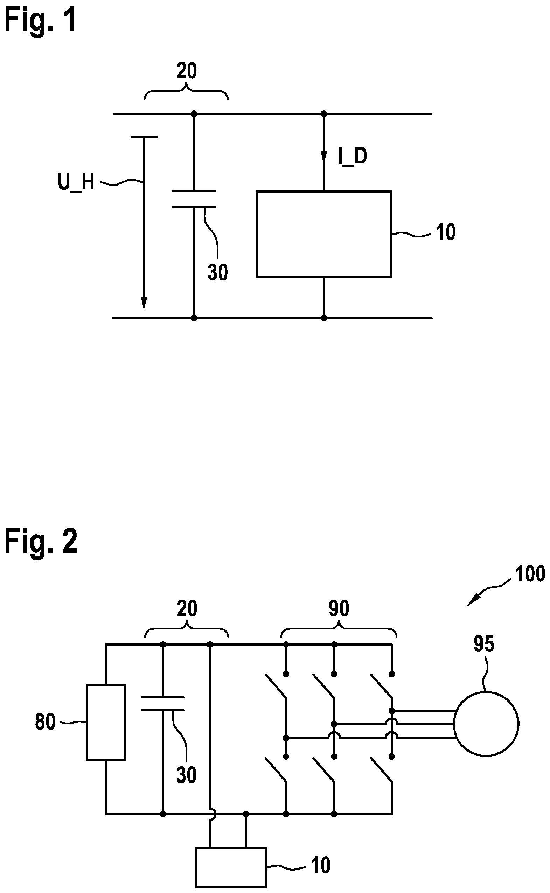

Die Figur 1 zeigt beispielhaft einen Hochvolt-Zwischenkreis, welcher einen Zwischenkreiskondensator 30 umfasst. An dem Zwischenkreiskondensator 30 liegt die Hochvoltspannung U_H an. Parallel zu dem Zwischenkreiskondensator 30 ist die Entladeschaltung 10 zur Entladung des Hochvolt-Zwischenkreises 20 angeschlossen. Zur Entladung des Hochvolt-Zwischenkreises 20 fließt durch die Entladeschaltung 10 ein Entladestrom I_D. Die Entladeschaltung 10 ist dazu eingerichtet, in Abhängigkeit der Hochvoltspannung U_H die Höhe des Entladestroms I_D durch die Entladeschaltung 10 einzustellen.

Die Figur 2 zeigt einen elektrischen Antriebsstrang 100 mit einer Entladeschaltung 10 zur Entladung des Hochvolt-Zwischenkreises 20, welcher einen Zwischenkreiskondensator 30 umfasst. Die Entladeschaltung 10 ist parallel zu dem Zwischenkreiskondensator 30 an den Hochvolt-Zwischenkreis 20 elektrisch angeschlossen. Insbesondere umfasst der elektrische Antriebsstrang 100 eine Batterie 80 oder vergleichbare Energiequellen und/oder einen Pulswechselrichter 90, der in der Figur 2 als eine B6-Brücke dargestellt ist, oder vergleichbare Steuereinheiten für einen elektrischen Antrieb und/oder eine elektrische Maschine 95. Insbesondere zur Speisung der elektrischen Maschine 95 ist der Hochvolt-Zwischenkreis 20 insbesondere mittels einem Pulswechselrichter 90 gekoppelt, welcher die elektrisch Energie aus der Batterie 80 zu der elektrischen Maschine 95 oder umgekehrt transportiert.

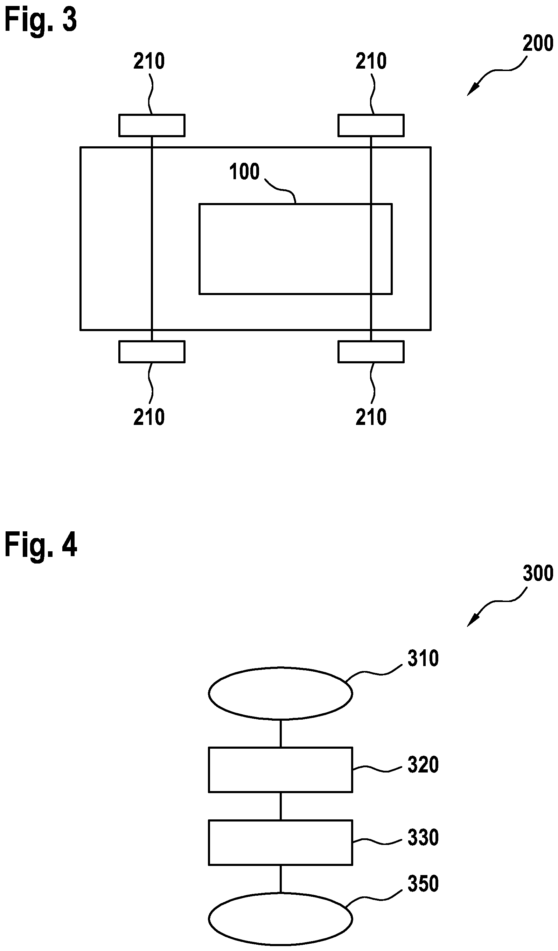

Figur 3 zeigt ein schematisch dargestelltes Fahrzeug 200 mit einem Antriebsstrang 100, welcher für den Antrieb des Fahrzeugs 200 dazu eingerichtet ist, mindestens ein Rad 210 des Fahrzeugs anzutreiben. Die Darstellung zeigt beispielhaft ein Fahrzeug 200 mit vier Rädern 210, wobei die Erfindung gleichermaßen in beliebigen Fahrzeugen mit einer beliebigen Anzahl an Rädern zu Lande zu Wasser und in der Luft einsetzbar ist.

Die Figur 4 zeigt einen schematischen Ablauf eines Verfahrens 300 zur Entladung eines Hochvolt-Zwischenkreises 20 eines Fahrzeugs. Mit Schritt 310 beginnt das Verfahren. Die Hochvoltspannung U_H am Zwischenkreiskondensator 30 wird in Schritt 320 ermittelt. In Abhängigkeit der ermittelten Hochvoltspannung U_H wird der Entladestrom I_D durch die Entladeschaltung 10 in Schritt 330 eingestellt. Insbesondere eine periodische Wiederholung dieser Schritte 310..330 erfolgt mindestens so lange bis die Hochvoltspannung den vorgegebenen Grenzwert unterschritten hat. Insbesondere mit dem Ansteigen der Hochvoltspannung startet das Verfahren autark. Mit Schritt 350 endet das Verfahren.

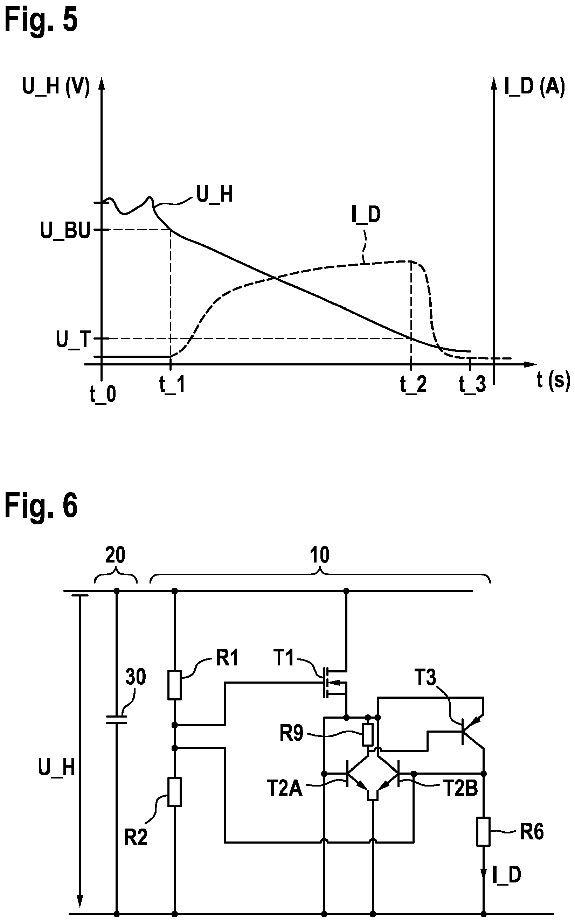

Die Figur 5 zeigt ein Diagramm, bei dem die Hochvoltspannung am Hochvolt-Zwischenkreis U_H (V) und der Entladestrom I_D (A) durch die Entladeschaltung 10 über der Zeit t (s) auftragen ist. Zum Zeitpunkt t_0 liegt die Hochvoltspannung U_H oberhalb eines unteren Betriebsspannungswertes U_BU. Solange die Hochvoltspannung U_H diesen unteren Betriebsspannungswert U_BU nicht unterschreitet ist der Entladestrom I_D minimal, bevorzugt fließt kein Entladestrom I_D durch die Entladeschaltung 10, da ein bestimmungsgemäßer Betrieb des Hochvolt-Zwischenkreises vorliegt. Insbesondere kann ein minimaler Entladestrom I_D aufgrund einer Mindest-Entladung durch ohnehin vorhandene Schaltungsteile des Pulswechselrichters fließen. Insbesondere dadurch sinkt die Hochvoltspannung U_H bei einer Trennung der Verbindung zur Hochvoltbatterie 80. Sobald die Hochvoltspannung U_H den unteren Betriebsspannungswert U_BU unterschreitet liegt kein bestimmungsgemäßer Betriebszustand des Hochvolt-Zwischenkreises vor. Deshalb erhöht sich der Entladestrom I_D durch die Entladeschaltung 10 und steigt mit sinkender Hochvoltspannung U_H weiter an. Der Entladestrom I_D fließt dazu durch einen elektrischen Verbraucher, beispielweise durch einen Lastwiderstand. Die Entladeschaltung 10 regelt den Entladestrom I_D bevorzugt so, dass der Hochvolt-Zwischenkreis 20 mit der maximalen Leistung des Verbrauchers entladen wird. Dieser Entladevorgang dauert beispielsweise an, bis die Hochvoltspannung U_H auf einen Wert unterhalb der Berührspannung U_T (beispielsweise 60 Volt) abgesunken ist. Falls die Hochvoltspannung U_H geringer als der Berührspannungswert U_T ist, stellt der Hochvolt-Zwischenkreis keine Gefahr für Lebewesen dar. Daher ist eine weitere Entladung nicht zwingend notwendig. Entsprechend sinkt der Entladestrom I_D durch die Entladeschaltung 10 nach dem Zeitpunkt t_2 weiter ab und erreicht somit zu einem späteren Zeitpunkt t_3 wieder einen minimalen Wert.

Die Figur 6 zeigt eine vereinfachte Schaltungstopologie für eine Entladeschaltung 10 eines Hochvolt-Zwischenkreises 20 mit einem Zwischenkreiskondensator 30. An dem Zwischenkreiskondensator 30 liegt die Hochvoltspannung U_H an. Den Eingang der Entladeschaltung 10 bildet ein Spannungsteiler aus den in Reihe geschalteten Widerständen R1 und R2 die parallel zu dem Zwischenkreiskondensator 30 geschaltet sind. Mittels der Dimensionierung der Widerstände R1 und R2 wird das Spannungsverhältnis zwischen der Spannung am Mittelabgriff zwischen den Widerständen R1 und R2 zu der Hochvoltspannung U_H eingestellt. Die Spannung an dem Mittelabgriff zwischen den Widerständen R1 und R2 dient beispielsweise als Gate-Spannung beispielweise für den Schalter T1, der im geschlossenen Zustand einen Entladestrom von dem hohen Potenzial des Zwischenkreiskondensators 30 über einen Lastwiderstand R6 als Verbraucher zu dem niedrigen Potenzial des Zwischenkreiskondensators 30 ermöglicht. Weiter dient der Zwischenabgriff zwischen den Widerständen R1 und R2 als Vergleichsbasis des Differenzverstärkers, der den Widerstand R9 und die zwei Transistoren T2A und T2B umfasst. Die Basis des Transistors T2B ist mit dem Lastwiderstand und dem Mittelabgriff zwischen den Widerständen R1 und R2 verbunden, sodass sich bei geeigneter Dimensionierung von Widerständen (nicht dargestellt) auf diesen Verbindungsleitungen ein Prozentsatz der Hochvoltspannung und die Spannung am Entladewiderstand, beziehungsweise Lastwiderstand R6, addiert. Diese Summe wird mit dem Differenzverstärker mittels den Transistoren T2A und T2B mit einem Sollwert, welcher mittels des Widerstands R2 dimensioniert wird, verglichen und steuert einen weiteren Transistor T3 an, der somit den Entladestrom I_D einstellt. Es ergeben sich folgende Bereiche der Hochvoltspannung U_H: Oberhalb des unteren Betriebsspannungswertes U_BU ist die Spannung am Widerstand R2 so hoch, dass der Strom durch den Lastwiderstand R6 auf 0A eingestellt wird. Im Bereich unterhalb des unteren Betriebsspannungswertes U_BU und oberhalb der Berührspannung U_T ist die Summe der Spannung am Lastwiderstand R6 und am Widerstand R2 konstant, d.h. der Entladestrom I_D steigt mit sinkender Hochvoltspannung U_H. Unterhalb der Berührspannung U_T ist der Strom durch den Lastwiderstand R6 aufgrund der Dimensionierung auf einem Maximalwert limitiert und sinkt bei geringer Hochvoltspannung U_H aufgrund sinkender Versorgungsspannung der Schaltung wieder auf 0A.

## Patentansprüche

1. Entladeschaltung (10) zur Entladung eines Hochvolt-Zwischenkreises (20) eines Fahrzeugs
wobei der Hochvolt-Zwischenkreis (20) einen Zwischenkreiskondensator (30) umfasst an dem eine Hochvoltspannung (U_H) anliegt;
wobei die Entladeschaltung (10) dazu eingerichtet ist, in Abhängigkeit der Hochvoltspannung (U_H) die Höhe eines Entladestroms (I_D) durch die Entladeschaltung (10) einzustellen,
**dadurch gekennzeichnet, dass** der Entladestrom (I_D) durch die Entladeschaltung (10) mit sinkender Hochvoltspannung (U_H) kontinuierlich größer wird, falls die Hochvoltspannung (U_H) kleiner als ein unterer Betriebsspannungswert (U_BU) ist.

2. Entladeschaltung (10) nach Anspruch 1, wobei der Entladestrom (I_D) mittels der Entladeschaltung (10) geregelt wird

3. Entladeschaltung (10) nach Anspruch 1, wobei der Entladestrom (I_D) durch die Entladeschaltung (10) minimal wird, falls die Hochvoltspannung (U_H) kleiner als ein Berührspannungswert (U_T) ist.

4. Entladeschaltung (10) nach einem der vorhergehenden Ansprüche, wobei die Entladeschaltung (10) als Verbraucher einen Lastwiderstand (R6) umfasst.

5. Antriebsstrang (100) mit einer Entladeschaltung (10) gemäß einem der Ansprüche 1 bis 4.

6. Fahrzeug (200) mit einem Antriebsstrang (100) nach Anspruch 5.

7. Verfahren (300) zur Entladung eines Hochvolt-Zwischenkreises (20) eines Fahrzeugs,
wobei der Hochvolt-Zwischenkreis (20) einen Zwischenkreiskondensator (30) umfasst an dem eine Hochvoltspannung (U_H) anliegt;
und eine Entladeschaltung (10) vorgesehen ist
mit den Schritten:
Ermitteln (320) der Hochvoltspannung (U_H);
Einstellen (330) eines Entladestroms (I_D) durch die Entladeschaltung (10) in Abhängigkeit der ermittelten Hochvoltspannung (U_H),
**dadurch gekennzeichnet, dass**
der Entladestrom (I_D) durch die Entladeschaltung (10) mit sinkender Hochvoltspannung (U_H) kontinuierlich größer wird, falls die Hochvoltspannung (U_H) kleiner als ein unterer Betriebsspannungswert (U_BU) wird.

8. Computerprogramm, das eingerichtet ist, das Verfahren (300) nach Anspruch 7 auszuführen.

9. Maschinenlesbares Speichermedium, auf dem das Computerprogramm nach Anspruch 8 gespeichert ist.

## Claims

1. Discharging circuit (10) for discharging a high-voltage DC link (20) of a vehicle,
wherein the high-voltage DC link (20) comprises a DC link capacitor (30), across which there is a high voltage (U_H);
wherein the discharging circuit (10) is configured to take the high voltage (U_H) as a basis for adjusting the level of a discharge current (I_D) through the discharging circuit (10)
**characterized in that**
the discharge current (I_D) through the discharging circuit (10) continuously becomes larger as the high voltage (U_H) falls if the high voltage (U_H) is below a lower operating voltage value (U_BU).

2. Discharging circuit (10) according to Claim 1,
wherein the discharge current (I_D) is controlled by means of the discharging circuit (10).

3. Discharging circuit (10) according to Claim 1,
wherein the discharge current (I_D) through the discharging circuit (10) becomes minimal if the high voltage (U_H) is below a touch voltage value (U_T).

4. Discharging circuit (10) according to one of the preceding claims,
wherein the discharging circuit (10) comprises a load resistor (R6) as load.

5. Drive train (100) having a discharging circuit (10) according to one of Claims 1 to 4.

6. Vehicle (200) having a drive train (100) according to Claim 5.

7. Method (300) for discharging a high-voltage DC link (20) of a vehicle,
wherein the high-voltage DC link (20) comprises a DC link capacitor (30), across which there is a high voltage (U_H);
and there is provision for a discharging circuit (10),
having the steps of:
ascertaining (320) the high voltage (U_H);
adjusting (330) a discharge current (I_D) through the discharging circuit (10) on the basis of the ascertained high voltage (U_H),
**characterized in that**
the discharge current (I_D) through the discharging circuit (10) continuously becomes larger as the high voltage (U_H) falls if the high voltage (U_H) is below a lower operating voltage value (U_BU).

8. Computer program configured to carry out the method (300) according to Claim 7.

9. Machine-readable storage medium on which the computer program according to Claim 8 is stored.

## Revendications

1. Circuit de décharge (10) permettant de décharger un circuit intermédiaire haute tension (20) d'un véhicule,
dans lequel le circuit intermédiaire haute tension (20) comprend un condensateur de circuit intermédiaire (30) auquel est appliquée une haute tension (U_H) ;
dans lequel le circuit de décharge (10) est conçu pour régler en fonction de la haute tension (U_H) le niveau d'un courant de décharge (I_D) à travers le circuit de décharge (10),
**caractérisé en ce que** le courant de décharge (I_D) à travers le circuit de décharge (10) augmente en continu lorsque la haute tension (U_H) diminue si la haute tension (U_H) est inférieure à une valeur de tension de service inférieure (U_BU).

2. Circuit de décharge (10) selon la revendication 1, dans lequel le courant de décharge (I_D) est régulé au moyen du circuit de décharge (10).

3. Circuit de décharge (10) selon la revendication 1, dans lequel le courant de décharge (I_D) à travers le circuit de décharge (10) devient minimal si la haute tension (U_H) est inférieure à une valeur de tension de contact (U_T).

4. Circuit de décharge (10) selon l'une quelconque des revendications précédentes, dans lequel le circuit de décharge (10) comprend une résistance de charge (R6) comme consommateur.

5. Chaîne cinématique (100) comprenant un circuit de décharge (10) selon l'une quelconque des revendications 1 à 4.

6. Véhicule (200) comprenant une chaîne cinématique (100) selon la revendication 5.

7. Procédé (300) permettant de décharger un circuit intermédiaire haute tension (20) d'un véhicule,
dans lequel le circuit intermédiaire haute tension (20) comprend un condensateur de circuit intermédiaire (30) auquel est appliquée une haute tension (U_H) ;
et un circuit de décharge (10) est prévu,
comprenant les étapes consistant à :
déterminer (320) la haute tension (U_H) ;
régler (330) un courant de décharge (I_D) à travers le circuit de décharge (10) en fonction de la haute tension déterminée (U_H),
**caractérisé en ce que** le courant de décharge (I_D) à travers le circuit de décharge (10) augmente en continu lorsque la haute tension (U_H) diminue si la haute tension (U_H) devient inférieure à une valeur de tension de service inférieure (U BU).

8. Programme informatique qui est conçu pour exécuter le procédé (300) selon la revendication 7.

9. Support de stockage lisible par machine, sur lequel est stocké le programme informatique selon la revendication 8.
